# FASCICULE DE BREVET EUROPEEN

(11) **EP 0 770 526 B1**
(45) Date de publication et mention de la délivrance du brevet: **12.07.2000**
(21) Numéro de dépôt: 96402189.3
(22) Date de dépôt: 11.10.1996
(51) Int. Cl.: B60S 1/34

(54) **Essuie-glace de véhicule automobile comportant des moyens de rappel élastique perfectionnés**
Kraftfahrzeug-Scheibenwischer mit elastischer Anpressvorrichtung
Windscreen wiper for a motor vehicle, including elastic biassing means

(30) Priorité: 16.10.1995 FR 9512419
(43) Date de publication de la demande: 02.05.1997
(73) Titulaire: VALEO SYSTEMES D'ESSUYAGE, 78321 La Verrière (FR)
(72) Inventeur: Lisiecki, Bruno, 92320 Chatillon (FR); Viaene, Alain, 78180 Montigny le Bretonneux (FR)
(74) Mandataire: Kohn, Philippe

(56) Documents cités:
- EP-A- 0 716 965
- GB-A- 2 149 651
- GB-A- 2 163 948
- GB-A- 2 188 537
- US-A- 3 076 992
- US-A- 3 088 154

## Description

L'invention concerne un essuie-glace de véhicule automobile comportant des moyens de rappel élastique perfectionnés en vue de leur standardisation.

L'invention concerne plus particulièrement un essuie-glace de véhicule automobile, du type dans lequel un bras d'essuie-glace est articulé par une extrémité longitudinale arrière, autour d'un axe transversal entre une position d'essuyage et une position dégagée, sur une tête d'entraînement en balayage alterné de l'essuie-glace, du type dans lequel l'extrémité longitudinale d'articulation du bras comporte deux ailes latérales longitudinales parallèles réunies par un dos supérieur transversal de manière à former une cavité ouverte en regard d'une vitre à essuyer, du type dans lequel il est prévu des moyens de rappel élastique agencés longitudinalement dans la cavité du bras, entre la tête d'entraînement et le bras, afin de solliciter ce dernier vers sa position d'essuyage, et du type dans lequel les moyens de rappel élastique comportent un ressort qui est accroché par une extrémité arrière sur la tête d'entraînement et par une extrémité avant sur un levier monté pivotant, entre une position de service et une position relevée, sur la tête d'entraînement autour d'un axe transversal, et du type dans lequel le levier comporte, à son extrémité longitudinale avant opposée à son extrémité arrière de pivotement, un bec qui, lorsque le bras est en position d'essuyage, appuie sur une partie en vis-à-vis du bras.

Le document US-A-3.088.154 décrit et représente un essuie-glace de ce type dans lequel l'extrémité libre avant du levier est recourbée transversalement vers le bas pour constituer un bec dont l'extrémité libre, dirigée vers la vitre à essuyer est en appui vertical contre un fond du bras, parallèle et opposé au dos contre lequel il appuie et peut glisser.

A l'heure actuelle, chaque véhicule possède des essuie-glace dont la forme et la taille sont adaptées à la surface de la vitre à essuyer et à l'implantation du dispositif d'entraînement en balayage alterné.

Il en résulte que, même pour des véhicules de gabarit similaire, chaque essuie-glace est entièrement spécifique, qu'il s'agisse du bras d'essuie-glace, de la tête d'entraînement ou des moyens de rappel élastique.

Il apparaît qu'il est en effet souhaitable d'adapter le bras et la tête d'entraînement pour chaque véhicule afin de balayer la plus grande surface possible de la vitre à essuyer en fonction des contraintes d'implantation de l'essuie-glace et également d'intégrer au mieux l'essuie-glace dans l'esthétique générale du véhicule.

Pour obtenir un essuyage optimal de la vitre à essuyer, il est nécessaire de bien maîtriser la pression d'essuyage du balai d'essuie-glace contre la vitre à essuyer, cette pression étant déterminée par les moyens élastiques de rappel.

Or, les essuie-glaces étant différents d'un modèle de véhicule à l'autre, il est également nécessaire de prévoir des ressorts de forme, de longueur et de raideur différentes pour s'adapter aux différents modèles d'essuie-glace.

Actuellement, chaque véhicule est donc muni d'un ressort de pression d'essuyage qui lui est propre, ce qui conduit à des coûts de production et de stockage importants.

Dans l'exemple de réalisation décrit et représenté dans le document US-A-3.088.154 mentionné précédemment, pour un ressort et levier déterminés, il n'existe aucune possibilité de réaliser simplement une gamme de bras permettant d'obtenir différentes valeurs déterminées de la force d'essuyage.

Dans le but d'apporter une solution à ce problème, l'invention propose un essuie-glace du type vu précédemment, caractérisé en ce que le bec est un bec longitudinal qui s'étend vers l'avant depuis l'extrémité longitudinale avant du levier, en ce que le bras comporte une traverse qui relie les deux ailes latérales du bras, en ce que, lorsque le bras est en position d'essuyage, le bec du levier s'étend entre le dos du bras et la traverse sur laquelle il appuie, par sa face inférieure tournée en regard de la vitre et sous l'action du ressort, et en ce que la valeur de la force d'appui appliquée au bras par les moyens de rappel élastique est fonction de la position de la traverse par rapport à l'axe d'articulation du bras sur la tête d'entraînement.

Selon divers modes de réalisation de l'invention:
- la tête d'entraînement comporte deux flancs longitudinaux qui s'étendent vers l'avant selon des plans parallèles sensiblement perpendiculaires à la vitre à essuyer et entre lesquels est reçue l'extrémité arrière de pivotement du levier ;
- l'extrémité arrière du levier est montée articulée sur une barre transversale cylindrique qui relie les deux flancs de la tête d'entraînement ;
- pour l'accrochage l'extrémité arrière du ressort, il est prévu une tige transversale qui relie les deux flancs de la tête d'entraînement et qui est agencée longitudinalement entre l'axe d'articulation du levier sur la tête d'entraînement et la vitre à essuyer ;
- la tige transversale est agencée sur la tête d'entraînement en arrière de l'axe d'articulation du levier de manière qu'il existe une position angulaire neutre du levier, entre sa position de service et sa position relevée, dans laquelle les points d'accrochage du ressort et l'axe d'articulation du levier sont alignés et que, lorsque le levier est soulevé, depuis sa position de service correspondant à la position d'essuyage du bras, au-delà de sa position neutre, le ressort force le levier en direction de sa position relevée ;
- en position relevée, le levier coopère avec une surface de butée de la tête d'entraînement contre laquelle il est sollicité par le ressort hélicoïdal ;
- lorsque le levier est soulevé au-delà de sa position neutre, son bec prend appui contre le dos supérieur du bras de manière à forcer le bras en direction de sa position dégagée ;
- le levier et le bras sont montés sur deux extrémités longitudinales opposées, respectivement avant et arrière, de la tête d'entraînement de manière que, lorsque le levier est bloqué en position relevée, il ne coupe pas la trajectoire de la traverse du bras autour de l'axe d'articulation du bras en sorte que le bras peut être amené vers sa position dégagée dans laquelle il est libre par rapport au levier ;
- pour son montage articulé sur la tête d'entraînement, le bras comporte un pivot transversal cylindrique muni de deux méplats symétriques parallèles, le pivot est solidaire du bras et est destiné à être reçu à rotation dans une bague tubulaire de la tête d'entraînement, la bague comporte une fente radiale dont la largeur correspond à l'écartement des méplats du pivot, et les méplats sont orientés de manière que le pivot ne puisse être engagé radialement dans la bague, au travers de la fente, que lorsque le bras est en position dégagée, et de manière que le pivot soit verrouillé dans la bague lorsque le bras est en position d'essuyage ;
- le levier comporte, entre ses deux extrémités avant et arrière, un évidement longitudinal dans lequel le ressort est reçu au moins partiellement ;
- les extrémités avant et arrière du levier sont reliées par deux longerons parallèles qui délimitent entre eux l'évidement longitudinal ;
- un doigt transversal est agencé entre les deux longerons du levier, au niveau de l'extrémité avant du levier, pour l'accrochage de l'extrémité avant du ressort ;
- le levier est réalisé par moulage en matière plastique.

D'autres caractéristiques et avantages de l'invention apparaîtront à la lecture de la description détaillée qui suit pour la compréhension de laquelle on se reportera aux dessins annexés dans lesquels :

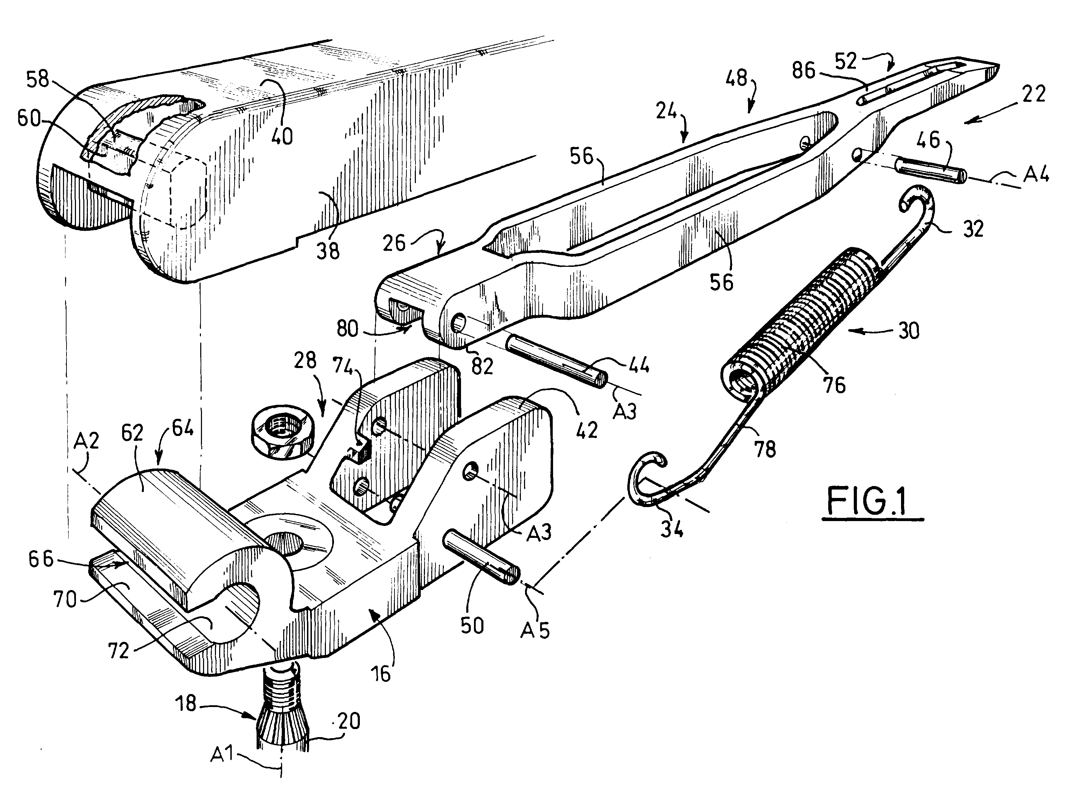

- la figure 1 est une vue partielle en perspective éclatée d'un essuie-glace conforme aux enseignements de l'invention ;

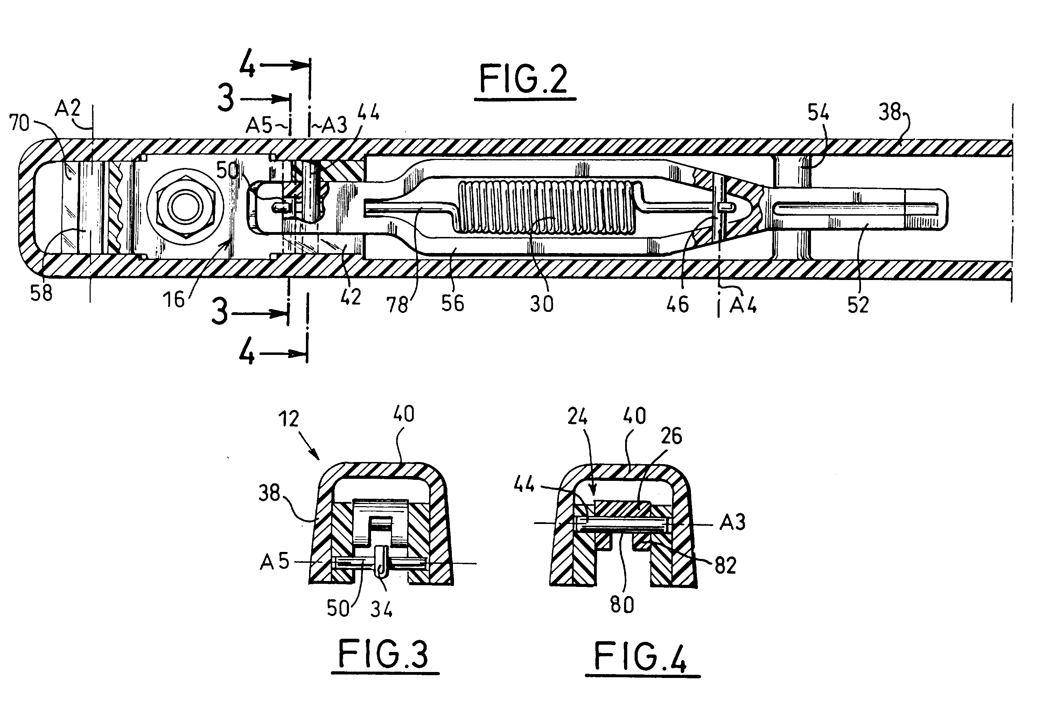

- la figure 2 est une vue de dessus, en coupe et avec arrachements, d'un tel essuie-glace ;
- les figures 3 et 4 sont des vues en coupe selon les lignes respectives 3-3 et 4-4 de la figure 2 ;
- la figure 5 est une vue partielle de côté en coupe longitudinale d'un tel essuie-glace, représenté en plusieurs positions.

On a représenté sur les figures un essuie-glace 10 de véhicule automobile qui est destiné à être entraîné en balayage rotatif alterné autour d'un axe A1 sensiblement perpendiculaire au plan d'une vitre à essuyer (non représentée).

L'essuie-glace 10 comporte un bras 12 qui est monté à rotation par une extrémité longitudinale arrière 14 autour d'un axe transversal A2 sensiblement parallèle au plan de la vitre à essuyer, sur une tête d'entraînement 16 montée sur l'extrémité supérieure 18 d'un arbre 20 d'entraînement en balayage rotatif alterné.

Le bras d'essuie-glace 12 porte, à son extrémité longitudinale avant (non représentée) un balai d'essuie-glace (non représenté) qui est destiné à essuyer la vitre.

De manière connue, des moyens de rappel élastique 22 sont agencés entre la tête d'entraînement 16 et le bras 12 pour solliciter le bras 12 vers une position d'essuyage dans laquelle il plaque le balai d'essuie-glace contre la vitre.

La maîtrise de la force d'appui imposée par le bras au balai est un élément essentiel pour obtenir un essuyage efficace de la vitre.

Les moyens de rappel élastique 22 de l'essuie-glace 12 selon l'invention comportent un levier rigide 24 qui est articulé par une extrémité longitudinale arrière 26 sur une extrémité longitudinale avant 28 de la tête d'entraînement 16, et un ressort hélicoïdal 30 qui est accroché par son extrémité avant 32 sur le levier 24 et par son extrémité arrière 34 sur l'extrémité longitudinale avant 28 de la tête d'entraînement 16.

De manière connue, les moyens de rappel élastique 22 sont agencés de manière que, lorsque l'essuie-glace 10 est en position d'essuyage, ils soient agencés à l'intérieur d'une cavité 36, ouverte en regard de la vitre à essuyer, de l'extrémité longitudinale arrière 14 du bras d'essuie-glace 12.

A cet effet, l'extrémité arrière 14 du bras 12 possède en section transversale une forme de U renversé formé par deux ailes latérales longitudinales parallèles 38 réunies par un dos supérieur transversal 40.

Cette disposition permet que les moyens de rappel élastique 22 soient invisibles depuis l'extérieur lorsque l'essuie-glace 10 est en position d'essuyage.

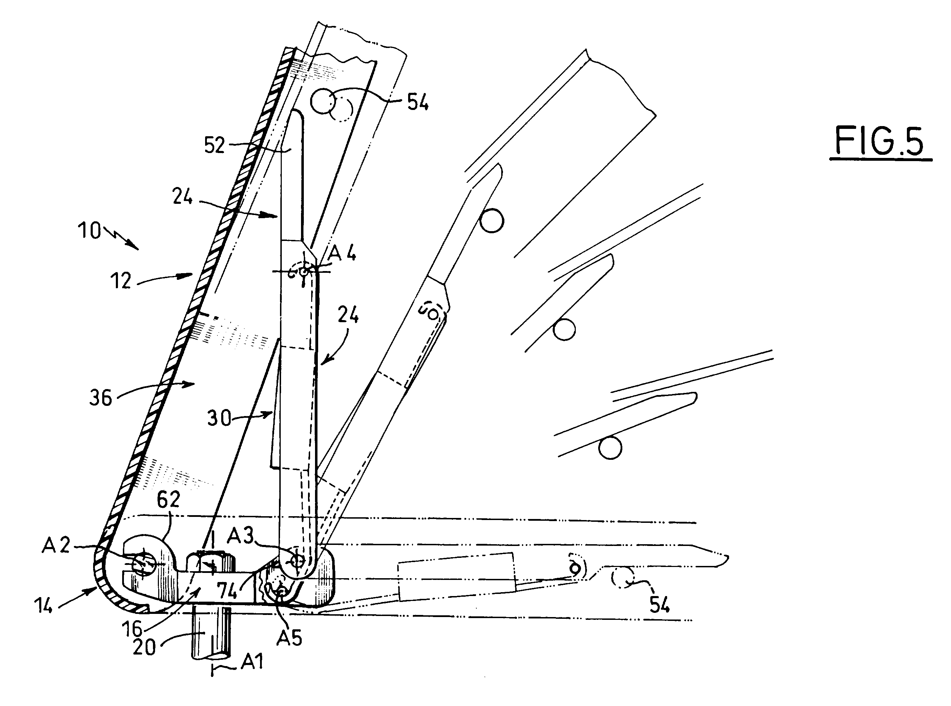

L'extrémité arrière 26 du levier 24 est reçue entre deux flancs latéraux 42, parallèles aux ailes latérales 38 du bras 12, de l'extrémité longitudinale avant 28 de la tête d'entraînement 16, et une barre cylindrique 44, introduite transversalement dans des perçages prévus à cet effet, permet l'assemblage pivotant du levier 24 sur la tête d'entraînement 16, autour d'un axe transversal A3, entre une position de service dans laquelle il est sensiblement parallèle au plan de la vitre à essuyer, et une position relevée dans laquelle il est représenté en traits pleins sur la figure 5.

Le ressort 30 est accroché par son extrémité avant 32 sur un doigt transversal 46, d'axe transversal A4, agencé à l'extrémité avant 48 du levier 24.

L'extrémité arrière 34 du ressort 30 est accrochée sur une tige transversale 50, d'axe A5, qui relie les deux flancs 42 de l'extrémité avant 28 de la tête d'entraînement 16.

Afin que le ressort 30 tende à ramener le levier 24 vers sa position de service, il est nécessaire que l'axe A5 de la tige transversale 50 d'accrochage de l'extrémité arrière 34 du ressort 30 sur la tête d'entraînement 16 soit agencée entre l'axe A3 d'articulation du levier 24 sur la tête d'entraînement 16 et la vitre à essuyer, c'est-à-dire qu'il est nécessaire que l'axe A5 soit agencé en dessous de l'axe A3 en considérant les figures.

Selon un aspect de l'invention, le levier 24 comporte un bec longitudinal 52 qui prolonge le levier 24 vers l'avant depuis son extrémité avant 48 et qui est destiné à venir en appui par sa face inférieure 53, lorsque le levier 24 est en position de service et lorsque le bras 12 est en position d'essuyage, contre une tige cylindrique 54 qui relie les deux ailes latérales 38 du bras 12. La tige cylindrique 54 est d'orientation perpendiculaire aux ailes latérales 38 du bras 12 et forme ainsi une traverse 54.

Plus précisément, le bec longitudinal 52 est alors reçu entre le dos supérieur 40 et la traverse 54 et, sous l'effet du ressort hélicoïdal 30, il prend appui sur la traverse 54 de manière à transmettre au bras d'essuie-glace 12 la force d'appui nécessaire à l'essuyage de la vitre.

Suivant la position longitudinale de la traverse 54 par rapport à l'axe d'articulation A2 du bras 12, on modifie le point de contact du bec longitudinal 52 du levier 24 sur la traverse 54 et on modifie ainsi la force imposée par le ressort 30 au bras d'essuie-glace 12.

On peut également modifier la valeur de cette force en modifiant la position de la traverse 54 selon une direction parallèle au plan de la vitre, ce qui a pour effet de modifier le bras de levier de la force d'action du ressort par rapport à l'axe d'articulation A3 du levier 24 sur la tête d'entraînement 16.

Ainsi avec le même levier 24 et le même ressort 30, il est possible d'équiper des bras de configurations géométriques différentes et d'obtenir, en adaptant la position de la traverse 54 sur le bras 12, une force d'appui adéquat au niveau du balai.

Cette conception des moyens de rappel élastique 22 permet ainsi de simplifier la gestion de la production et du stockage des pièces en réduisant le nombre de références nécessaires pour équiper une gamme variée de véhicules automobiles.

De manière à alléger le levier 24, et de manière à ménager un espace pour le ressort hélicoïdal 30, les deux extrémités longitudinales 26, 48 du levier 24 sont réunies par deux longerons parallèles 56 entre lesquels le ressort 30 est reçu.

Le levier 24 est de préférence réalisé par moulage, en particulier en matière plastique.

Selon un mode de réalisation de l'invention, le bras d'essuie-glace 12 est réalisé en matière plastique et il comporte, pour son articulation sur la tête d'entraînement 16, un pivot transversal cylindrique 58 d'axe A2 qui relie les deux ailes 38 et qui est muni de deux méplats parallèles 60 agencés symétriquement de part et d'autre de l'axe A2 d'articulation du bras 12. Les méplats 60 sont agencés dans des plans sensiblement perpendiculaires à la direction longitudinale du bras 12.

Le pivot cylindrique 58 est destiné à pivoter dans une bague 62 agencée à l'extrémité arrière 64 de la tête d'entraînement 16.

La bague 62 est munie d'une fente 66 à faces parallèles 70, agencées dans un plan sensiblement parallèle au plan de la vitre à essuyer.

La largeur de la fente 66 est égale à l'écartement des deux méplats 60 du pivot cylindrique 58 si bien que pour le montage du bras 12 sur la tête d'entraînement 16, il suffit de présenter le bras 12 sensiblement vertical de manière que le pivot 58 soit en regard de la fente 66 de la bague 62, les méplats 60 étant agencés parallèlement aux faces 70, et d'introduire radialement le pivot 58 dans la bague 62.

En rabattant alors le bras 12 vers sa position d'essuyage, le pivot 58 pivote dans l'alésage interne 72 de la bague 62 et, les méplats 60 des flancs 70 de la fente 66 n'étant plus orientés parallèlement, le pivot 58 se retrouve verrouillé à l'intérieur de la bague 62.

Selon un aspect de l'invention, l'axe A5 de la tige transversale 50 d'accrochage de l'extrémité arrière 34 du ressort 30 est agencé en arrière, en considérant les figures, de l'axe A3 de pivotement du levier 24 sur la tête d'entraînement 16.

Ainsi, lorsque le levier 24 est soulevé depuis sa position de service vers sa position relevée, il existe une position angulaire neutre du levier 24 dans laquelle les axes A3, A4, A5, respectivement de pivotement du levier 24 et d'accrochage des extrémités 32, 34 du ressort 30, sont coplanaires, si bien que le levier 24 est dans une position d'équilibre instable.

Si l'on poursuit le soulèvement du levier 24 vers sa position relevée, le ressort 30 accompagne alors ce mouvement jusqu'à ce que l'extrémité arrière 26 du levier 24 vienne en appui contre une surface de butée 74 agencée entre les deux flancs 42 de l'extrémité avant 28 de la tête d'entraînement 16.

Le levier 24 est alors bloqué en position relevée, dans une position sensiblement verticale dans l'exemple de réalisation représenté sur les figures.

Selon un mode de réalisation de l'invention, le bras 12 et le levier 24 sont articulés autour d'axes A2, A3 relativement éloignés l'un de l'autre sur la tête d'entraînement 16, de sorte que lorsque le levier 24 est en position relevée, il n'est plus susceptible d'entrer en contact avec la traverse 54 qui a une étendue très limitée selon la longueur du bras 12 du fait qu'elle est constituée par une tige cylindrique.

Ainsi, le bras 12 peut poursuivre librement sa rotation jusqu'à sa position dégagée de montage ou de démontage.

Par ailleurs, le bec longitudinal 52 du levier 24 comporte une face supérieure 86 biseautée de manière à ne pas bloquer le mouvement relatif du bec 52 par rapport au bras 12, entre la traverse 54 et le dos supérieur 40, dû à l'écart angulaire entre le levier 42 et le bras 12 induit par l'écartement des axes A2, A3 d'articulation du bras 12 et du levier 42 sur la tête d'entraînement 16.

Lorsque le levier 24 a dépassé sa position neutre, le bec longitudinal 52, sous l'action du ressort 30, vient en appui contre le dos transversal 40 du bras 12 et tend à faire pivoter le bras 12 vers sa position dégagée de montage et de démontage.

Comme on peut le voir sur les figures, l'extrémité arrière 34 du ressort 30 est reliée aux spires 76 du ressort 30 par un brin 78 coudé de manière à contourner la barre cylindrique 44 d'articulation du levier 24 lorsque celui-ci est en position relevée. Dans le même but, l'extrémité longitudinale arrière 26 du levier 24 comporte un évidement 80, dans sa face inférieure 82 tournée en regard de la vitre, pour le passage du brin courbé 78 du ressort 30.

## Revendications

1. Essuie-glace de véhicule automobile, du type dans lequel un bras d'essuie-glace (12) est articulé par une extrémité longitudinale arrière (14), autour d'un axe transversal (A2) entre une position d'essuyage et une position dégagée, sur une tête d'entraînement (16) en balayage alterné de l'essuie-glace (10), du type dans lequel l'extrémité longitudinale d'articulation (14) du bras (12) comporte deux ailes latérales longitudinales (38) parallèles réunies par un dos supérieur transversal (40) de manière à former une cavité (36) ouverte en regard d'une vitre à essuyer, du type dans lequel il est prévu des moyens de rappel élastique (22) agencés longitudinalement dans la cavité (36) du bras (12), entre la tête d'entraînement (16) et le bras (12), afin de solliciter ce dernier vers sa position d'essuyage, et du type dans lequel les moyens de rappel élastique (22) comportent un ressort (30) qui est accroché par une extrémité arrière (34) sur la tête d'entraînement (16) et par une extrémité avant (32) sur un levier (24) monté pivotant, entre une position de service et une position relevée, sur la tête d'entraînement (16) autour d'un axe transversal (A3), et du type dans lequel le levier (24) comporte, à son extrémité longitudinale avant opposée à son extrémité arrière (26) de pivotement, un bec (52) qui, lorsque le bras (12) est en position d'essuyage, appuie sur une partie en vis-à-vis du bras, **caractérisé en ce que** le bec est un bec longitudinal qui s'étend vers l'avant depuis l'extrémité longitudinale avant du levier, en ce que le bras comporte une traverse (54) qui relie les deux ailes latérales (38) du bras (12), en ce que, lorsque le bras (12) est en position d'essuyage, le bec (52) du levier (24) s'étend entre le dos (40) du bras (12) et la traverse (54) sur laquelle il appuie, par sa face inférieure (53) tournée en regard de la vitre et sous l'action du ressort (30), et en ce que la valeur de la force d'appui appliquée au bras par les moyens de rappel élastique est fonction de la position de la traverse (54) par rapport à l'axe d'articulation (A2) du bras (12) sur la tête d'entraînement (16).

2. Essuie-glace selon la revendication 1, caractérisé en ce que la tête d'entraînement (16) comporte deux flancs longitudinaux (42) qui s'étendent vers l'avant selon des plans parallèles sensiblement perpendiculaires à la vitre à essuyer et entre lesquels est reçue l'extrémité arrière (26) de pivotement du levier (24).

3. Essuie-glace selon la revendication 2, caractérisé en ce que l'extrémité arrière (26) du levier (24) est montée articulée sur une barre transversale cylindrique (44) qui relie les deux flancs (42) de la tête d'entraînement (16).

4. Essuie-glace selon la revendication 3, caractérisé en ce que, pour l'accrochage l'extrémité arrière (34) du ressort (30), il est prévu une tige transversale (50) qui relie les deux flancs (42) de la tête d'entraînement (16) et qui est agencée longitudinalement entre l'axe d'articulation (A3) du levier (24) sur la tête d'entraînement (16) et la vitre à essuyer.

5. Essuie-glace selon la revendication 4, caractérisé en ce que la tige transversale (50) est agencée sur la tête d'entraînement (16) en arrière de l'axe d'articulation (A3) du levier (24) de manière qu'il existe une position angulaire neutre du levier (24), entre sa position de service et sa position relevée, dans laquelle les points d'accrochage du ressort (30) et l'axe d'articulation du levier sont alignés et que, lorsque le levier (24) est soulevé, depuis sa position de service correspondant à la position d'essuyage du bras (12), au-delà de sa position neutre, le ressort (30) force le levier (24) en direction de sa position relevée.

6. Essuie-glace selon la revendication 5, caractérisé en ce que, en position relevée, le levier (42) coopère avec une surface de butée (74) de la tête d'entraînement (30) contre laquelle il est sollicité par le ressort hélicoïdal (30).

7. Essuie-glace selon l'une des revendications 5 ou 6, caractérisé en ce que, lorsque le levier (24) est soulevé au-delà de sa position neutre, son bec (52) prend appui contre le dos supérieur (40) du bras (12) de manière à forcer le bras (12) en direction de sa position dégagée.

8. Essuie-glace selon l'une quelconque des revendications précédentes, caractérisé en ce que le levier (24) et le bras (12) sont montés sur deux extrémités longitudinales opposées, respectivement avant (28) et arrière (64), de la tête d'entraînement (16) de manière que, lorsque le levier (24) est bloqué en position relevée, il ne coupe pas la trajectoire de la traverse (54) du bras (12) autour de l'axe d'articulation (A2) du bras (12) en sorte que le bras (12) peut être amené vers sa position dégagée dans laquelle il est libre par rapport au levier (24).

9. Essuie-glace selon l'une quelconque des revendications précédentes, caractérisé en ce que, pour son montage articulé sur la tête d'entraînement (16), le bras comporte un pivot transversal cylindrique (58) muni de deux méplats symétriques parallèles (60), en ce que le pivot (58) est solidaire du bras (12) et est destiné à être reçu à rotation dans une bague tubulaire (62) de la tête d'entraînement (16), en ce que la bague (62) comporte une fente radiale (66) dont la largeur correspond à l'écartement des méplats (70) du pivot (58), et en ce que les méplats (60) sont orientés de manière que le pivot (58) ne puisse être engagé radialement dans la bague, au travers de la fente (66), que lorsque le bras (12) est en position dégagée, et de manière que le pivot (58) soit verrouillé dans la bague (62) lorsque le bras (12) est en position d'essuyage.

10. Essuie-glace selon l'une quelconque des revendications précédentes, caractérisé en ce que le levier (24), comporte, entre ses deux extrémités avant (48) et arrière (26), un évidement longitudinal dans lequel le ressort (30) est reçu au moins partiellement.

11. Essuie-glace selon la revendication 10, caractérisé en ce que les extrémités avant (48) et arrière (26) du levier (24) sont reliées par deux longerons parallèles (56) qui délimitent entre eux l'évidement longitudinal.

12. Essuie-glace selon la revendication 11, caractérisé en ce qu'un doigt transversal (46) est agencé entre les deux longerons (56) du levier (24), au niveau de l'extrémité avant (48) du levier (24), pour l'accrochage de l'extrémité avant (32) du ressort (30).

13. Essuie-glace selon l'une quelconque des revendications précédentes, caractérisé en ce que le levier (24) est réalisé par moulage en matière plastique.

## Patentansprüche

1. Scheibenwischer für ein Kraftfahrzeug, bei dem ein Scheibenwischerarm (12) durch ein hinteres Längsende (14) um eine Querachse (A2) zwischen einer Wischposition und einer Freigabeposition an einem Antriebskopf (16) für den Pendelwischantrieb des Scheibenwischers (10) gelagert ist, wobei das Gelenklängsende (14) des Wischerarms (12) zwei parallele seitliche Längsschenkel (38) umfaßt, die durch einen oberen Querrücken (40) verbunden sind, um eine gegenüber einer zu wischenden Scheibe offene Austiefung (36) zu bilden, wobei elastische Anpreßmittel (22) vorgesehen sind, die zwischen dem Antriebskopf (16) und dem Wischerarm (12) angeordnet sind, um letzteren zu seiner Wischposition zu beaufschlagen, und wobei die elastischen Anpreßmittel (22) eine Feder (30) umfassen, die durch ein hinteres Ende (34) am Antriebskopf (16) und durch ein vorderes Ende (32) an einem Hebel (24) eingehakt ist, der zwischen einer Betriebsposition und einer angehobenen Position am Antriebskopf (16) schwenkbar um eine Querachse (A3) gelagert ist, und wobei der Hebel (24) an seinem vorderen Längsende, das seinem hinteren Schwenkende (26) gegenüberliegt, ein Endstück (52) umfaßt, das, wenn sich der Wischerarm (12) in der Wischposition befindet, auf einem gegenüberliegenden Teil des Wischerarms aufliegt, **dadurch gekennzeichnet**, daß das Endstück ein Längsendstück ist, das sich vom vorderen Längsende des Hebels aus nach vorn erstreckt, daß der Wischerarm ein Querstück (54) umfaßt, das die beiden Seitenschenkel (38) des Wischerarms (12) verbindet, daß sich das Endstück (52) des Hebels (24), wenn sich der Wischerarm (12) in der Wischposition befindet, zwischen dem Rücken (40) des Wischerarms (12) und dem Querstück (54) erstreckt, auf dem es durch seine zur Scheibe gerichtete Unterseite (53) und unter der Einwirkung der Feder (30) anliegt, und daß der Wert des durch die elastischen Anpreßmittel auf den Wischerarm ausgeübten Anpreßdrucks von der Position des Querstücks (54) im Verhältnis zur Gelenkachse (A2) zur Anlenkung des Wischerarms (12) am Antriebskopf (16) abhängig ist.

2. Scheibenwischer nach Anspruch 1, **dadurch gekennzeichnet**, daß der Antriebskopf (16) zwei Längsflanken (42) umfaßt, die sich nach vorn entlang zu der zu wischenden Scheibe in etwa senkrechten parallelen Ebenen erstrecken und zwischen denen das hintere Schwenkende (26) des Hebels (24) eingesetzt ist.

3. Scheibenwischer nach Anspruch 2, **dadurch gekennzeichnet**, daß das hintere Ende (26) des Hebels (24) gelenkig an einem zylindrischen Querstab (44) gelagert ist, der die beiden Flanken (42) des Antriebskopfes (16) verbindet.

4. Scheibenwischer nach Anspruch 3, **dadurch gekennzeichnet**, daß für das Einhaken des hinteren Endes (34) der Feder (30) ein Querstift (50) vorgesehen ist, der die beiden Flanken (42) des Antriebskopfes (16) verbindet und der in Längsrichtung zwischen der Gelenkachse (A3) zur Anlenkung des Hebels (24) am Antriebskopf (16) und der zu wischenden Scheibe angeordnet ist.

5. Scheibenwischer nach Anspruch 4, **dadurch gekennzeichnet**, daß der Querstift (50) am Antriebskopf (16) hinter der Gelenkachse (A3) des Hebels (24) angeordnet ist, so daß eine neutrale Winkelposition des Hebels (24) zwischen seiner Betriebsposition und seiner angehobenen Position existiert, in der die Einhakpunkte der Feder (30) und die Gelenkachse des Hebels aufeinander ausgerichtet sind, und daß, wenn der Hebel (24) von seiner Betriebsposition, die der Wischposition des Wischerarms (12) entspricht, über seine neutrale Position hinaus angehoben wird, die Feder (30) den Hebel (24) in Richtung seiner angehobenen Position bewegt.

6. Scheibenwischer nach Anspruch 5, **dadurch gekennzeichnet**, daß in der angehobenen Position der Hebel (42) mit einer Anschlagfläche (74) des Antriebskopfes (16) zusammenwirkt, gegen die er durch die Schraubenfeder (30) beaufschlagt wird.

7. Scheibenwischer nach einem der Ansprüche 5 oder 6, **dadurch gekennzeichnet**, daß, wenn der Hebel (24) über seine neutrale Position hinaus angehoben wird, sein Endstück (52) am oberen Rücken (40) des Wischerarms (12) zur Anlage kommt, um den Wischerarm (12) in Richtung seiner Freigabeposition zu bewegen.

8. Scheibenwischer nach einem der vorangehenden Ansprüche, **dadurch gekennzeichnet**, daß der Hebel (24) und der Wischerarm (12) an zwei gegenüberliegenden Längsenden, einem vorderen (28) bzw. einem hinteren (64) Ende, des Antriebskopfes (16) gelagert sind, so daß der Hebel (24), wenn er in angehobener Position arretiert ist, nicht die Bahn des Querstücks (54) des Wischerarms (12) um die Gelenkachse (A2) des Wischerarms (12) herum schneidet, damit der Wischerarm (12) zu seiner Freigabeposition gebracht werden kann, in der er im Verhältnis zum Hebel (24) freigegeben ist.

9. Scheibenwischer nach einem der vorangehenden Ansprüche, **dadurch gekennzeichnet**, daß der Wischerarm für seine gelenkige Lagerung am Antriebskopf (16) einen zylindrischen Querzapfen (58) mit zwei symmetrischen parallelen Abflachungen (60) umfaßt, daß der Zapfen (58) fest mit dem Wischerarm (12) verbunden und für die drehbare Aufnahme in einem rohrförmigen Ring (62) des Antriebskopfes (16) bestimmt ist, daß der Ring (62) einen radialen Schlitz (66) umfaßt, dessen Breite der Entfernung der Abflachungen (70) des Zapfens (58) entspricht, und daß die Abflachungen (60) so ausgerichtet sind, daß der Zapfen (58) nur dann radial in den Ring durch den Schlitz (66) hindurch eingesetzt werden kann, wenn sich der Wischerarm (12) in der Freigabeposition befindet, und so daß der Zapfen (58) im Ring (62) verriegelt ist, wenn sich der Wischerarm (12) in der Wischposition befindet.

10. Scheibenwischer nach einem der vorangehenden Ansprüche, **dadurch gekennzeichnet**, daß der Hebel (24) zwischen seinen beiden Enden, dem vorderen (48) und dem hinteren (26) Ende, eine Längsausnehmung umfaßt, in der die Feder (30) wenigstens teilweise eingesetzt ist.

11. Scheibenwischer nach Anspruch 10, **dadurch gekennzeichnet**, daß die vorderen (48) und hinteren (26) Enden des Hebels (24) durch zwei parallele Längsstücke (56) verbunden sind, welche die Längsausnehmung zwischen sich begrenzen.

12. Scheibenwischer nach Anspruch 11, **dadurch gekennzeichnet**, daß zwischen den beiden Längsstücken (56) des Hebels (24) in Höhe des vorderen Endes (48) des Hebels (24) ein Querfinger (46) für das Einhaken des vorderen Endes (32) der Feder (30) angeordnet ist.

13. Scheibenwischer nach einem der vorangehenden Ansprüche, **dadurch gekennzeichnet**, daß der Hebel (24) als Formteil aus Kunststoff ausgeführt ist.

## Claims

1. A motor vehicle screen wiper, of the type in which a screen wiper arm (12) is articulated at a longitudinal rear end (14) about a transverse axis (A2), between a wiping position and a free position, on a head (16) for driving the screen wiper (10) in alternating wiping motion, of the type in which the longitudinal articulation end (14) of the arm (12) comprises two parallel, lateral, longitudinal wing portions (38) which are joined together through a transverse spine (40) at the top in such a way as to define a cavity (36) which is open facing a glass to be swept, of the type in which resilient return means (22) are provided, being disposed longitudinally within the cavity (36) of the arm (12), between the drive head (16) and the arm (12), so as to bias the latter towards its wiping position, and of the type in which the resilient return means (22) comprise a spring (30) which is hooked by its rear end (34) on the drive head (16) and by its front end (32) on a lever (24), which is mounted on the drive head (16) for pivoting movement about a transverse axis (A3) between a service position and a raised position, and of the type in which the lever (24) includes, at its front longitudinal end opposite to its pivoted rear end (26), a finger (52) which, when the arm (12) is in its wiping position, is engaged on a facing portion of the arm, characterised in that the finger is a longitudinal finger which extends forward from the front longitudinal end of the lever, in that the arm includes a transverse element (54) which joins the two lateral wing portions (38) of the arm (12) together, in that, when the arm (12) is in its wiping position, the finger (52) of the lever (24) extends between the spine (40) of the arm (12) and the transverse element (54), on which it bears through its lower face (53) that faces towards the glass and under the action of the spring (30), and in that the value of the thrust force applied to the arm by the resilient return means is a function of the position of the transverse element (54) with respect to the axis of articulation (A2) of the arm (12) on the drive head (16).

2. A screen wiper according to Claim 1, characterised in that the drive head (16) has two longitudinal flanks (42) which extend forward in parallel planes which are substantially at right angles to the glass to be swept, and between which the pivoted rear end (26) of the lever (24) is received.

3. A screen wiper according to Claim 2, characterised in that the rear end (26) of the lever (24) is articulated on a transverse cylindrical bar (44) which joins the two flanks (42) of the drive head (16) together.

4. A screen wiper according to Claim 3, characterised in that, for hooking attachment of the rear end (34) of the spring (30), a transverse rod (50) is provided which joins together the two flanks (42) of the drive head (16), and which is disposed longitudinally between the axis of articulation (A3) of the lever (24) on the drive head (16) and the glass to be swept.

5. A screen wiper according to Claim 4, characterised in that the transverse rod (50) is arranged on the drive head (16) behind the articulation axis (A3) of the lever (24), so that there is a neutral angular position of the lever (24), between its service position and its raised position, in which the hooking points of the spring (30) and the articulation axis of the lever are aligned with each other, and so that, when the lever (24) is raised from its service position corresponding to the wiping position of the arm (12), beyond its neutral position, the spring (30) forces the lever (24) towards its raised position.

6. A screen wiper according to Claim 5, characterised in that, in the raised position, the lever (42) cooperates with an abutment surface (74) of the drive head (30), against which it is urged by the helical spring (30).

7. A screen wiper according to Claim 5 or Claim 6, characterised in that, when the lever (24) is raised from its neutral position, its finger (52) bears against the top spine (40) of the arm (12) so as to force the arm (12) towards its disengaged position.

8. A screen wiper according to any one of the preceding Claims, characterised in that the lever (24) and the arm (12) are mounted on two opposed longitudinal ends of the drive head (16), namely a front end (28) and a rear end (64), so that, when the lever (24) is held in its raised position, it does not cut the path of the transverse element (54) of the arm (12) about the articulation axis (A2) of the arm (12), whereby the arm (12) can be brought to its disengaged position in which it is free with respect to the lever (24).

9. A screen wiper according to any one of the preceding Claims, characterised in that, for its articulated mounting on the drive head (16), the arm includes a transverse cylindrical pivot (58) having two parallel symmetrical flats (60), in that the pivot (58) is fixed to the arm (12) and is arranged to be received for rotation in a tubular cuff portion of the drive head (16), in that the cuff portion (62) has a radial slot (66) the width of which corresponds to the spacing between the flats (60) of the pivot (58), and in that the flats (60) are orientated in such a way that the pivot (58) can be engaged radially within the cuff portion, through the slot (66) only when the arm (12) is in its disengaged position, and in such a way that the pivot (58) is locked into the cuff portion (62) when the arm (12) is in its wiping position.

10. A screen wiper according to any one of the preceding Claims, characterised in that the lever (24) includes, between its two ends, namely the front end (48) and the rear end (26), a longitudinal aperture in which the spring (30) is received at least partly.

11. A screen wiper according to Claim 10, characterised in that the front end (48) and the rear end (26) of the lever (24) are joined together by two parallel longerons (56) which define the longitudinal aperture between them.

12. A screen wiper according to Claim 11, characterised in that a transverse finger (46) is disposed between the two longerons (56) of the lever (24), in the region of the front end (48) of the lever (24), for hooking attachment of the front end (32) of the spring (30).

13. A screen wiper according to any one of the preceding Claims, characterised in that the lever (24) is made by moulding in plastics material.
